# EUROPÄISCHE PATENTSCHRIFT

(11) **EP 4 001 992 B1**
(45) Veröffentlichungstag und Bekanntmachung des Hinweises auf die Patenterteilung: **24.01.2024**
(21) Anmeldenummer: 20208775.5
(22) Anmeldetag: 19.11.2020
(51) Int. Cl.: G02B 25/00, G02C 7/08, G02C 11/04

(54) **LUPENBRILLE UND ENTSPRECHENDER ADAPTER FÜR EIN VERGRÖSSERUNGSAUFSATZ**
LOUPE SPECTACLES AND CORRESPONDING ADAPTER FOR A MAGNIFICATION ATTACHMENT
LUNETTES-LOUPES ET ADAPTATEUR CORRESPONDANT POUR UN DISPOSITIF DE GROSSISSEMENT

(43) Veröffentlichungstag der Anmeldung: 25.05.2022
(73) Patentinhaber: MB-Technics GmbH, 85567 Grafing (DE)
(72) Erfinder: BODENBURG, Martin, 85567 Grafing (DE)
(74) Vertreter: HGF

(56) Entgegenhaltungen:
- US-A1- 2020 133 029
- Orangedental: "Lupenbrille opt- on 2.7/3.3 TTL", , 9. August 2019 (2019-08-09), XP055799465, Gefunden im Internet: URL:https://www.zwp-online.info/files/1645 65/opt-on_Broschuere_DE_final_LR.pdf [gefunden am 2021-04-28]
- Anonymous: "Amazon.com: LED 2 Head-Mounted Magnifier,Double Eye Head Wearing Magnifying Glasses Jeweler Watch Clock Repair Loupe with 2.X to 25X Eight Groups Lens: Camera & Photo", , 8. November 2018 (2018-11-08), XP055799540, Gefunden im Internet: URL:https://www.amazon.com/dp/B07K9L645Q [gefunden am 2021-04-28]
- Thorlabs: "SM05 FEMALE QUICK RELEASE ADAPTER", , 7 July 2013 (2013-07-07), XP055894616, Retrieved from the Internet: URL:https://www.thorlabs.com/drawings/e188 0620508c1084-60E578A1-F574-011C-0C37EDB1C0 4176BE/SM05QAF-AutoCADPDF.pdf [retrieved on 2022-02-23]
- Zeiss: "EyeMag Medical Loupes from ZEISS Seeing is believing", , 19 December 2019 (2019-12-19), XP055799320, Retrieved from the Internet: URL:https://www.zeiss.com/content/dam/med/ ref_international/products/medical-loupes/ pdf/eyemag-medical-loupes-for-neuro-ent-sp ine-pr-surgery.pdf [retrieved on 2021-04-28]

## Beschreibung

Die vorliegende Erfindung betrifft einen Adapter und eine solche Lupenbrille.

Ärzte, insbesondere Chirurgen und Zahnärzte, verwenden oft Lupenbrillen bei der Diagnose oder Operation, um möglichst präzise den jeweiligen Patienten untersuchen zu können. Eine Lupenbrille ist eine Brille, bei welcher an den Brillengläsern jeweils eine Lupe oder ein Fernrohr befestigt ist, so dass der Träger der Brille durch die Lupe bzw. das Fernrohr hindurchsehen kann. Optional können die Lupenbrillen auch mit einer Beleuchtungseinrichtung versehen sein, so dass die mit den Lupen bzw. Ferngläsern betrachtbaren Bereiche optimal ausgeleuchtet sind.

Lupenbrillen sind auf einen bestimmten Arbeitsabstand eingestellt, der im Tiefenschärfenbereich der an der Brille fixierten Fernrohre liegt. Die Fernrohre besitzen eine feste Brennweite. Zoomfernrohre hätten den Vorteil, dass die Brennweite veränderbar ist. Aber Zoomfernrohre sind lichtschwächer, und weisen in der Regel eine reduzierte Abbildungsqualität auf. Um die beiden Fernrohre einer Lupenbrille als Zoomfernrohre auszubilden, müsste man sie mechanisch koppeln, so dass die beiden Fernrohre synchron verstellbar sind und hierdurch die gleiche Brennweite besitzen. Zoomfernrohre sind wesentlich aufwendiger als Fernrohre mit fester Brennweite, dadurch schwerer. Eine mechanische verschiebliche Kopplung würde zusätzliches Gewicht verursachen. Das Gewicht der Fernrohre wird alleine mittels des Brillengestells der Lupenbrille getragen. Dies und die geringe Abbildungsqualität von Zoomfernrohren machen es praktisch unmöglich, Zoomfernrohre für Lupenbrillen zu verwenden.

Vom Hersteller Orangedental (https://www.orangedental.de/lupenbrille-opt-on-2/) ist eine Lupenbrille (Lupenbrille opt-on^{®}) mit einem Brillengestell und zwei Brillengläsern verfügbar. An den beiden Brillengläsern sind zwei Fernrohre angeordnet. An vorderen Enden der Fernrohre sind austauschbare "Vario-Clips" befetigbar. Diese Vario-Clips umfassen einen ringförmigen Rahmen, in den eine Optik für einen veränderbaren Arbeitsabstand nicht-lösbar eingesetzt ist. Über eine Art Klippmechanismus können die "Vario-Clips" mit den Fernrohren verbunden werden.

Bei Amazon (URL: https://www.amazon.com/dp/B07K9L645Q) ist eine Art Brillenvorrichtung verfügbar. Diese umfasst ein Tragegestell, wobei verschiedene Arten von Fernrohren in dieses Tragegestell einsetzbar sind. Diese lupenartige Brille ist insbesondere für Uhrmacher und Juweliere geeignet.

In der US 2020/133029 A1 ist eine Lupenbrille offenbart, die ein Brillengestell mit zwei Brillengläsern umfasst, wobei jeweils ein Fernrohr vor jedem Brillenglas angeordnet ist.

Bei Thorlabs (https://www.thorlabs.com/thorproduct.cfm?partnumber=SM05QAF) ist eine Art Adapter erhältlich. Dieser hat auf der einen Seite ein Gewinde und auf der anderen Seite ein Bajonett, um optische Komponenten in einem herkömmlichen optischen Tubus zu befestigen. Der Adapter eignet sich somit zur Befestigung einer Vergrößerungsoptik an einem vorhandenen Tubusfernrohr.

Der
Erfindung liegt die Aufgabe zugrunde, Mittel bereitzustellen, mit welchen es möglich ist an Lupenbrillen eine unterschiedliche Vergrößerung vorzusehen, ohne dass der Tragekomfort und die Funktion der Lupenbrille beeinträchtigt werden.

Die Aufgabe wird durch die Gegenstände der unabhängigen Ansprüche gelöst. Vorteilhafte Ausgestaltungen sind in den jeweiligen Unteransprüchen angegeben.

Nach einem ersten Aspekt betrifft die Erfindung eine Lupenbrille mit einem Adapter für ein Vergrösserungsaufsatz an einem ihrer Fernrohre. Der Adapter weist einen Ringkörper auf, welcher an einer Seite ein Verbindungselement zum lösbar Verbinden des Ringkörpers an das vordere Ende eines der Fernrohre der Lupenbrille aufweist und an der anderen Seite des Ringkörpers ist ein Koppelmechanismus zum Koppeln eines Vergrößerungsaufsatzes ein Adapter und damit mittelbar an das Fernrohr der Lupenbrille vorgesehen.

Mit diesem Adapter kann ein Vergrößerungsaufsatz am Fernrohr einer Lupenbrille befestigt werden. Somit kann die Lupenbrille mit und ohne Vergrößerungsaufsatz benutzt werden, wodurch unterschiedliche Vergrößerungen realisiert werden. Die Verwendung jeweils eines Vergrößerungsaufsatzes auf den beiden Fernrohren einer Lupenbrille hat den gegenüber einem Zoom-Fernrohr den Vorteil, dass auch mit dem Vergrößerungsaufsatz die Fernrohre vergleichsweise kompakt und leicht sind, eine große Tiefenschärfe und eine hohe Abbildungsqualität besitzen und zudem die beiden Fernrohre jeweils die gleiche Brennweite aufweisen. Die Benutzung einer Lupenbrille mit Vergrößerungsaufsätzen unterscheidet sich nicht von der Benutzung einer herkömmlichen Lupenbrille ohne derartige Vergrößerungsaufsätze. Durch Aufsetzen bzw. Abnehmen der Vergrößerungsaufsätze kann die Brennweite und damit die Vergrößerung der Lupenbrille verändert werden. Durch die stufenweise Veränderung der Brennweite bzw. der Vergrößerung der beiden Fernrohre ist sichergestellt, dass die beiden Fernrohre jeweils im Wesentlichen identisch eingestellt sind, so dass eine individuelle Anpassung der Fernrohre zueinander nicht notwendig ist. Zudem kann mit diesen Vergrößerungsaufsätzen sichergestellt werden, dass die beiden Fernrohre ihren Tiefenschärfebereich jeweils im gleichen Abstand zum Fernrohr besitzen, so dass in beiden Fernrohren der gleiche Bereich scharf abgebildet werden kann. Ein weiterer Vorteil der Verwendung solcher Vergrö-ßerungsaufsätze liegt darin, dass diese so ausgebildet sein können, dass sie den Arbeitsabstand der Lupenbrille, d.h. den Abstand der Tiefenschärfenbereiche von den beiden Fernrohren nicht verändern, gleichermaßen, ob die Vergrößerungsaufsätze auf die beiden Fernrohre aufgesetzt sind oder nicht. Hierdurch kann ein Benutzer der Lupenbrille diese in der gewohnten Art und Weise benutzen und kann mit unterschiedlichen Vergrößerungen auf seinen Arbeitsbereich blicken, ohne dass ein individuelles Einstellen notwendig ist.

Vorzugsweise fasst der Ringkörper eine Scheibe ein, so dass der Ringadapter mit dieser Scheibe das Fernrohr vor Beschädigung schützt.

Das Verbindungselement zum lösbaren Verbinden des Ringkörpers am vorderen Ende eines der Fernrohre ist als Gewinde ausgebildet.

Der Koppelmechanismus des Adapters zum Koppeln eines Vergrößerungsaufsatzes ist vorzugsweise als Schnellverschluss ausgebildet. Ein solcher Schnellverschluss kann beispielsweise ein Bajonettverschluss oder eine Steckverbindung sein, so dass mit einem einfachen Handgriff der Vergrößerungsaufsatz an den Adapter gekoppelt bzw. von diesem gelöst werden kann.

Der Adapter kann ein oder mehrere Magnete aufweisen, die vorzugsweise in den Ringkörper integriert sind, welche zum Koppeln an entsprechende Magnete am Vergrößerungsaufsatz ausgebildet und angeordnet sind. Diese Magnete sind vorzugsweise in Verbindung mit einem Koppelmechanismus vorgesehen. In Verbindung mit einem Bajonettverschluss halten die Magnete den Vergrößerungsaufsatz in einer bestimmten Drehposition bezüglich des ringförmigen Adapters, wodurch ein versehentliches Lösen des Bajonettverschlusses verhindert wird. Bei einer Steckverbindung, bei welcher vorzugsweise der Vergrößerungsaufsatz und Adapter formschlüssig ineinander eingreifen, verhindern die Magnete ein versehentliches Lösen und Auseinanderziehen der Steckverbindung.

Der Adapter kann auch mit einem Rastelement versehen sein, das mit einem Gegenrastelement am Vergrößerungsaufsatz rastend in Eingriff treten kann. Mit einer solchen Rastverbindung kann auch die Position des Vergrößerungsaufsatzes bezüglich des Fernrohres fixiert werden. Eine solche Rastverbindung kann deshalb auch in vorteilhafter Weise in Kombination mit einem solchen Schnellverschluss vorgesehen sein.

Der Adapter kann auch zum Halten vorbestimmter Filter verwendet werden. Ein solcher Filter kann nur für bestimmte Wellenbereiche transparent sein. Es sind zum Beispiel Verfahren zur Detektion von Karies mittels spezifischer Fluoreszenz unter Licht mit 405nm bekannt. Hierzu ist es zweckmäßig einen Filter vorzusehen, der vor allem für Licht mit 405nm intransparent ist um dadurch den Kontrast bei der Diagnose zu erhöhen. In Verbindung mit den Magneten und/oder den Rastelementen kann die Drehposition eines Filters bezüglich des Fernrohres exakt festgelegt werden. Dies kann zweckmäßig bei Verwendung von Polarisationsfiltern sein, deren Polarisationsrichtung exakt festgelegt werden sollte.

Nach der vorliegenden Erfindung ist eine Lupenbrille nach Anspruch 1 vorgesehen. In einem vergleichenden Beispiel können zwei Brillengläser auch aus einer einzigen, durchgehenden, transparenten Scheibe ausgebildet sein. In der Regel weisen jedoch Lupenbrillen zwei separate optische Brillengläser auf, welche für den jeweiligen Benutzer in an sich bekannter Weise angepasst und eingeschliffen sind.

Diese Lupenbrille zeichnet sich dadurch aus, dass die Fernrohre mit einem Vergrößerungsaufsatz versehen sind, der lösbar am jeweiligen Fernrohr befestigt ist.

Die Fernrohre besitzen in der Regel an ihrem vorderen Ende ein Innengewinde, in welches eine Schutzkappe eingeschraubt ist, um das Fernrohr vor Beschädigung zu schützen. Diese Schutzkappe kann entfernt werden und das Innengewinde des jeweiligen Fernrohres kann dazu benutzt werden, jeweils einen der Vergrößerungsaufsätze am Fernrohr zu befestigen. Die Vergrößerungsaufsätze sind dann jeweils mit einem entsprechenden Gegengewinde versehen.

An jedem Fernrohr der Lupenbrille ist ein oben erläuterter Adapter vorgesehen, mit welchem jeweils ein Vergrößerungsaufsatz an das Fernrohr gekoppelt werden kann.

Die Vergrößerungsaufsätze sind derart ausgebildet, dass sie die Brennweite des jeweiligen Fernrohrs um einen vorbestimmten Faktor n vervielfachen.

Der Faktor n beträgt vorzugsweise zumindest 1,2 und insbesondere zumindest 1,5. Der Faktor n ist in der Regel nicht größer als 5 und insbesondere nicht größer als 3.

Der Vergrößerungsaufsatz ist vorzugsweise als Galilei-System ausgebildet, das zumindest eine Sammel- und eine Zerstreuungslinse umfasst. Grundsätzlich ist es auch möglich, den Vergrößerungsaufsatz als Keppler-System auszubilden, das aus zumindest zwei Sammellinsen ausgebildet ist. Ein Keppler-System beansprucht eine wesentlich längere Bauform, weshalb Galilei-Systeme für den Vergrößerungsaufsatz vorteilhaft sind. Beim Keppler-System müsste zudem ein Spiegel oder ein Prisma eingesetzt sein, da ein Keppler-System das Bild dreht.

Die Fernrohre der Lupenbrille können sowohl als Galilei-System als auch als Keppler-System ausgebildet sein.

Vorzugsweise sind die beiden Fernrohre mit einer Brücke miteinander verbunden. Dies ist insbesondere dann zweckmäßig, wenn die beiden Fernrohre eine große Vergrößerung besitzen, wobei durch die Brücke sichergestellt wird, dass die Fernrohre auf denselben Bereich ausgerichtet sind.

Der Vergrößerungsaufsatz kann auch mit einem Prisma versehen sein, das das Blickfeld beispielsweise nach unten ablenkt. Ein solches Prisma kann auch mittels des oben erläuterten Adapters oder direkt an die jeweiligen Fernrohre der Lupenbrille gekoppelt werden. Diese Primen erlauben eine aufrechte Kopfhaltung und dennoch eine Blickrichtung auf einen weiter unten angeordneten Arbeitsbereich. Hierdurch ist die Haltung des Trägers der Lupenbrille ergonomischer als bei einer Position, bei welcher er ohne solche Prismen nach unten schauen muss.

Die Brille kann auch mit einer Beleuchtungseinrichtung versehen sein.

Nachfolgend wird die Erfindung beispielhaft näher anhand der Zeichnungen erläutert. Die Zeichnungen zeigen beispielhaft in:
- Figur 1: eine Lupenbrille mit zwei Fernrohren in perspektivischer Ansicht,
- Figur 2: eine Lupenbrille mit zwei Fernrohren, wobei die Fernrohre mit einer Brücke verbunden sind, in perspektivischer Ansicht,
- Figur 3: ein Gehäuse eines Vergrößerungsaufsatzes im Querschnitt,
- Figur 4a, 4b: ein Gehäuse eines Vergrößerungsaufsatzes mit Koppelelemente für einen Bajonettverschluss im Querschnitt und in einer Stirnansicht,
- Figur 5a-5d: einen Grundkörper für einen Adapter für ein Fernrohr einer Lupenbrille in perspektivischen Ansichten und Schnittansichten, wobei Fig. 5d einen Schnitt entlang der Linie Vd-Vd in Fig. 5c zeigt. und
- Figur 5f: einen Adapter und einen Vergrößerungsaufsatz in einer Explosionsdarstellung.

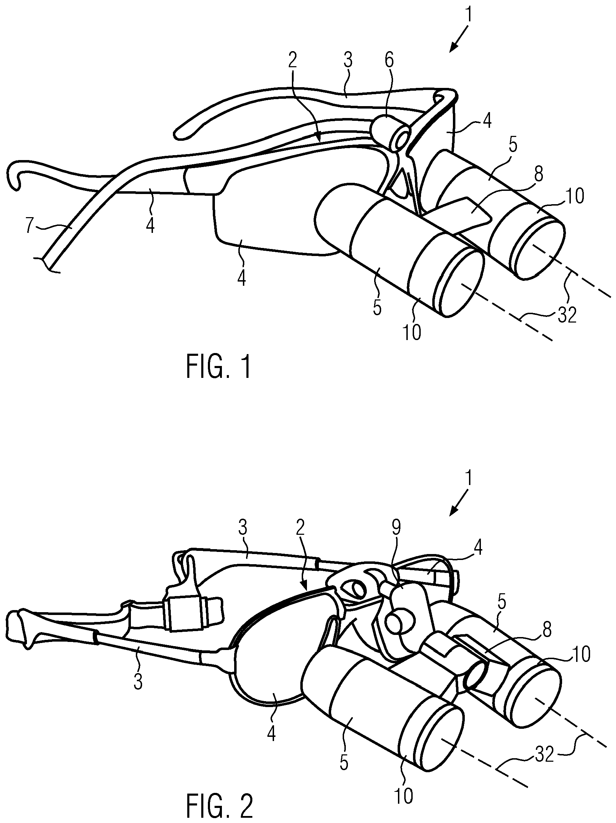

Eine Lupenbrille 1 weist grundsätzlich ein Brillengestell 2 mit zwei Brillenbügeln 3 und zwei Brillengläsern 4 (Fig. 1, 2) auf. Die Brillenbügel 3 sind in üblicher Weise schwenkbar an der Brille ausgebildet. An oder vor den Brillengläsern 4 ist jeweils ein Fernrohr 5 angeordnet, durch die der Benutzer der Brille 1 beim Tragen der Brille 1 hindurchsehen kann. Optional kann eine Beleuchtungseinrichtung 6 an der Brille 1 angeordnet sein, welche mittels eines Kabels 7 mit Strom versorgt werden kann. Das Kabel 7 kann jedoch auch dazu vorgesehen sein, um Bilddaten, welche mit einer im Fernrohr 5 integrierten Kamera erfasst werden, an einen geeigneten Empfänger zu übertragen.

Die Fernrohre 5 können an den Brillengläsern 4 frei nach vorne vorstehend ausgebildet sein (nicht dargestellt) oder mit einer Brücke 8 (Figur 1 und 2) miteinander verbunden sein. Durch die Brücke 8 wird sichergestellt, dass die beiden Fernrohre 5 exakt zueinander ausgerichtet sind und man beim Betrachten eines Arbeitsbereiches durch beide Fernrohre auf den gleichen Bereich blickt. Bei starken Vergrößerungen der Fernrohre ist es zweckmäßig, diese mit einer Brücke 8 zu verbinden.

Die Fernrohre 5 können unmittelbar an den Brillengläsern 4 befestigt sein. Hierzu wird in die Brillengläser ein entsprechendes Loch geschnitten, in welches die Fernrohre 5 jeweils mit einem Endbereich eingesetzt und verklebt werden (Fig. 1).

Die Fernrohre 5 können auch mit Abstand vor den Brillengläsern 4 angeordnet sein. Hierbei ist die Brücke 8, die die beiden Fernrohre 5 verbindet, über ein Haltegestell 9 mit dem Brillengestell 2 verbunden (Figur 2). Bei dieser Ausführungsform ist es zweckmäßig, wenn die Brücke 8 mit einem Schwenkgelenk ausgebildet ist, so dass der Abstand zwischen den Fernrohren 5 veränderbar ist und das Haltegestell 9 einen Schwenkmechanismus aufweist, mit welchem die Höhe der Fernrohre 5 bezüglich der Brillengläser 4 und deren Abstand bezüglich der Brillengläser 4 einstellbar ist.

Die in Figur 1 und 2 gezeigten Lupenbrillen zeichnen sich durch einen Vergrößerungsaufsatz 10 aus, der am vorderen Ende der Fernrohre 5 aufgesetzt ist.

Der jeweilige Vergrößerungsaufsatz 10 ist mit dem entsprechenden Fernrohr 5 lösbar verbunden.

Die Fernrohre 5 sind mehrlinsige Fernrohre, die in der Regel nach dem Keppler-System oder nach dem Galilei-System ausgebildet sind. Fernrohre nach dem Galilei-System sind kürzer und damit leichter als Fernrohre nach dem Keppler-System. Mit Fernrohren nach dem Keppler-System kann in der Regel eine größere Brennweite und eine größere Vergrößerung als mit Fernrohren nach dem Galilei-System, bei sehr guten Abbildungseigenschaften erzielt werden.

Der Vergrößerungsaufsatz ist vorzugsweise als Galilei-System ausgebildet, das zumindest eine Sammel- und eine Zerstreuungslinse umfasst. Der Vergrößerungsaufsatz bildet somit ein weiteres Fernrohr mit einer vorbestimmten Vergrößerung. Durch Aufsetzen bzw. Befestigen des Vergrößerungsaufsatzes 10 an dem jeweiligen Fernrohr 5 kann die Brennweite des jeweiligen Fernrohres und damit die Vergrößerung des Fernrohres um einen vorbestimmten Faktor n vervielfacht werden.

Der Vergrößerungsaufsatz ist vorzugsweise so ausgebildet, dass der Faktor n zumindest 1,2 und insbesondere zumindest 1,5 beträgt. Es hat sich bei Prototypen gezeigt, dass es zweckmäßig ist, den Vergrößerungsaufsatz so auszubilden, dass der Faktor n nicht größer als 5 und insbesondere nicht größer als 3 ist. Hiermit ist sichergestellt, dass der Vergrößerungsaufsatz kompakt ausgebildet werden kann und die Funktion der Lupenbrille nicht erheblich beeinträchtigt. Der Vergrößerungsaufsatz besitzt vorzugsweise eine Länge von nicht mehr als 4 cm, insbesondere nicht mehr als 3,5 cm und vorzugsweise nicht mehr als 3 cm. Das Gewicht eines Vergrößerungsaufsatzes beträgt vorzugsweise nicht mehr als 20 g bzw. nicht mehr als 15 g und insbesondere nicht mehr als 10 g.

Hierdurch ist sichergestellt, dass bei der Benutzung der Lupenbrille 1 mit und ohne Vergrö-ßerungsaufsatz der Tragekomfort der Lupenbrille nicht beeinträchtigt wird.

Der Vergrößerungsaufsatz 10 ist vorzugsweise derart ausgebildet, dass er den Arbeitsabstand des jeweiligen Fernrohres 5 nicht verändert, d.h., der Abstand des Tiefenschärfebereichs des Fernrohres 5 zum jeweiligen Fernrohr bleibt im Wesentlichen unverändert. Dies wird durch die gezielte Konstruktion eines Vergrößerungsaufsatzes 10, angepasst an das jeweilige Fernrohr 5 erzielt. Dabei sind Brennweite des Fernrohres 5 sowie die Systemparameter, Vergrößerung und Brennweite, des Vergrößerungsaufsatzes 10 aufeinander anzupassen. Alternativ wäre auch ein Vergrößerungsaufsatz 10 mit variablem Systemabstand denkbar, welcher zum manuellen Fokussieren ausgebildet ist. Mit anderen Worten heißt dies, dass der Vergrößerungsaufsatz invariant zum Arbeitsabstand des jeweiligen Fernrohres ist. Hierdurch ist sichergestellt, dass ein Benutzer der Lupenbrille beim Aufsetzen bzw. beim Abnehmen den Abstand der Lupenbrille zu dem Bereich, den er betrachtet, nicht verändern muss, womit er mit der gleichen Körperhaltung den gleichen Gegenstand betrachten kann, unabhängig davon, ob die Lupenbrille mit dem Vergrößerungsaufsatz versehen ist.

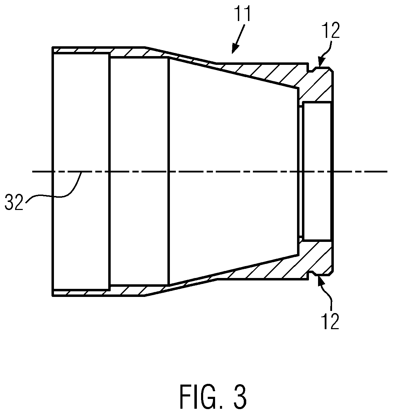

Wie es eingangs bereits erläutert worden ist, besitzt das Fernrohr für Lupenbrillen in der Regel an ihrem vorderen Ende ein Innengewinde, in welches eine Schutzkappe eingeschraubt ist, um das Fernrohr vor Beschädigung zu schützen. Diese Schutzkappe kann entfernt werden und in das freiliegende Innengewinde des Fernrohres kann ein Vergrößerungsaufsatz eingeschraubt werden. Das Gehäuse eines solchen Vergrößerungsaufsatzes ist in Figur 3 im Querschnitt gezeigt. Das Gehäuse 11 des Vergrößerungsaufsatzes 10 ist rohrförmig zur Aufnahme zumindest zweier Linsen ausgebildet. Am rückwärtigen Ende des Vergrößerungsaufsatzes 10 ist ein Außengewinde 12 ausgebildet. Das Außengewinde 12 des Vergrößerungsaufsatzes 10 kann mit dem Innengewinde des Fernrohres in Eingriff treten, so dass der Vergrößerungsaufsatz 10 auf das Fernrohr 5 geschraubt werden kann. Mit dieser Schraubverbindung steht der Vergrößerungsaufsatz 10 in einer exakten Relativposition zum Fernrohr 5, so dass die Linsen des Vergrößerungsaufsatzes 10 mit den Linsen des Fernrohres 5 zusammenwirken können. Durch die exakte Positionierung des Vergrößerungsaufsatzes 10 zum Fernrohr 5 mittels der Schraubverbindung ist kein Nachjustieren des Vergrößerungsaufsatzes 10 bezüglich des Fernrohres 5 notwendig und ein Benutzer der Lupenbrille kann durch die Kombination aus dem Fernrohr 5 und dem Vergrößerungsaufsatz 10 einen Arbeitsbereich in einem größeren Maßstab betrachten als wenn er die Lupenbrille ohne den Vergrößerungsaufsatz 10 benutzen würde.

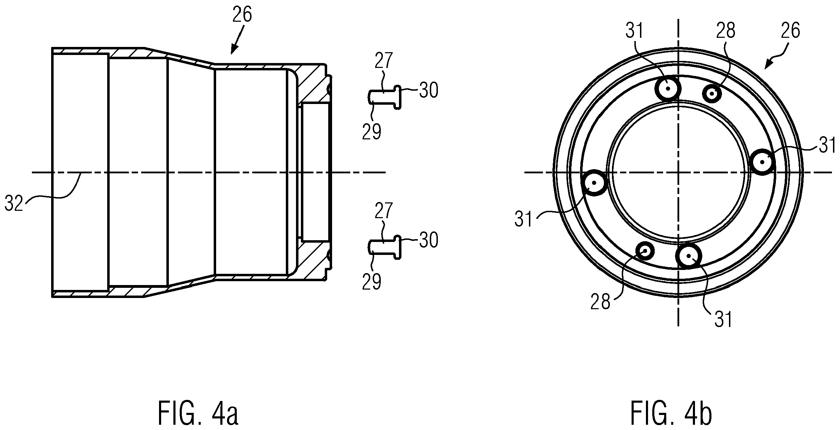

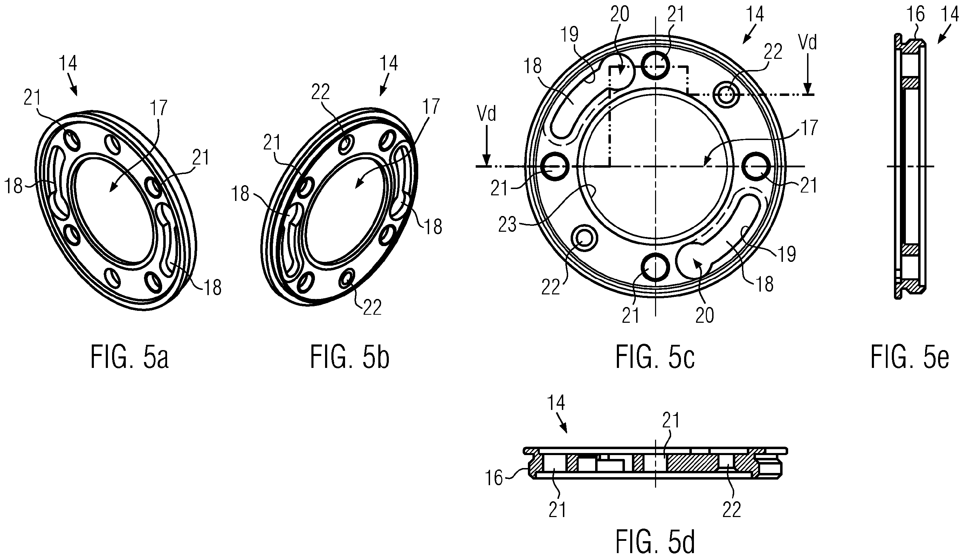

Nachfolgend wird ein zweites Ausführungsbeispiel erläutert (Figur 4a, 4b; Figur 5a-5f), bei dem der Vergrößerungsaufsatz 10 mittels eines Adapters 13 am Fernrohr 5 befestigt wird.

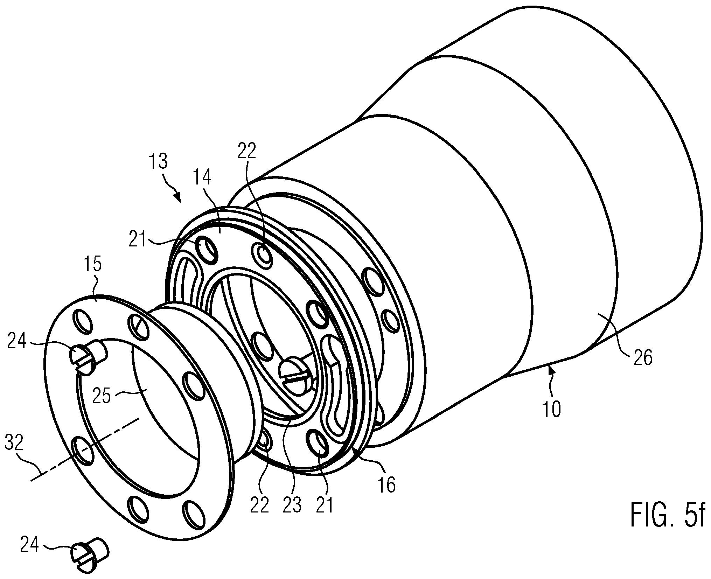

Der Adapter 13 weist einen ringförmigen Grundkörper 14 und eine ringförmige Abdeckplatte 15 auf (Figur 5f). Der ringförmige Grundkörper 14 weist an seinem Außenumfang ein Außengewinde 16 auf (Fig. 5e), das mit dem Innengewinde des Fernrohres in Eingriff treten kann. Der ringförmige Grundkörper 14 besitzt eine Dicke von etwa 2 bis 3 mm und eine zentrale Durchgangsöffnung 17, deren Durchmesser etwa der Apertur des Fernrohres bzw. der Eingangsapertur des Vergrößerungsaufsatzes 10 entspricht. Am ringförmigen Grundkörper 14 sind zwei Bajonettschlitze 18 ausgebildet, welche diametral gegenüberliegend angeordnet sind. Die beiden Bajonettschlitze sind bogenförmige Langlöcher, wobei sie an der zum Vergrößerungsaufsatz 10 weisenden Seite (Figur 5c) einen an den Langlöchern nach innen vorstehenden Vorsprung 19 aufweisen, der fast das gesamte Langloch mit Ausnahme eines Endbereiches umfasst. An diesem Endbereich ist hierdurch eine etwa kreisförmige Zugangsöffnung 20 zum Bajonettschlitz 18 ausgebildet.

Der ringförmige Grundkörper 14 weist vier Durchgangsbohrungen auf, welche jeweils eine Aufnahme 21 zum Aufnehmen eines Magnetkörpers bilden. Diese Aufnahmen 21 sind in Umfangsrichtung gleichmäßig voneinander beabstandet, d.h., dass bei vier Aufnahmen 21 der Winkelabstand zwischen zwei benachbarten Aufnahmen 90° beträgt.

Weiterhin ist der ringförmige Grundkörper 14 mit zwei Gewindebohrungen 22 versehen.

An der zentralen Durchgangsöffnung 17 ist ein nach innen vorstehender Ringsteg 23 ausgebildet, welcher bündig mit der zum Vergrößerungsaufsatz 10 weisenden Außenfläche abschließt.

Die zum Fernrohr weisende Seite des ringförmigen Grundkörpers 14 wird durch die ringförmige Abdeckplatte 15 (Figur 5f) abgedeckt, welche mittels zweier Schrauben 24 an den Grundkörper 14 befestigt wird, wobei die Schrauben 24 in die Gewindebohrungen 22 jeweils eingreifen. Die Abdeckplatte 15 überdeckt die Bajonettschlitze 18.

Die Abdeckplatte 15 weist vier Bohrungen auf, welche mit den Aufnahmen 21 für die Magnetelemente fluchten. In die Aufnahmen 21 werden kreisförmige Magnetelemente (nicht dargestellt) eingesetzt und darin verklebt.

In die zentrale Durchgangsöffnung 17 des ringförmigen Grundkörpers 14 wird vor dem Abdecken mit der Abdeckplatte 15 eine kreisförmige Scheibe 25, insbesondere Glasscheibe, eingesetzt (Fig. 5f). Diese Glasscheibe liegt mit ihrem Rand am Ringsteg 23 des Grundkörpers 14 an und wird auf der anderen Seite am Randbereich von der Abdeckplatte 15 abgedeckt und im Adapter 13 gehalten.

Der Adapter 13 kann damit anstelle einer Schutzkappe an der Vorderseite eines Fernrohres eingeschraubt werden und deckt mittels der Scheibe 25 die Vorderseite des Fernrohres vollständig ab. Der Adapter 13 kann somit die Schutzfunktion der Abdeckkappe übernehmen.

Figur 4a und Figur 4b zeigen ein Gehäuse 26 des Vergrößerungsaufsatzes 10, das Bajonettkoppelelemente 27 aufweist, welche in die Bajonettschlitze 18 des Adapters 13 zum Ausbilden eines Bajonettverschlusses eingreifen können. Hierzu sind an der zum Adapter weisenden Stirnseite des Gehäuses 26 zwei diametral gegenüberliegend angeordnete Gewindebohrungen 28 (Figur 4b) vorgesehen, in welche jeweils eines der Bajonettkoppelelemente 27 eingeschraubt wird. Diese Bajonettkoppelelemente 27 bestehen jeweils aus einem Gewindestift 29 und einem Koppelkopf 30, der etwa einem Schraubenkopf entspricht. Die Bajonettkoppelelemente 27 sind so weit in die Gewindebohrung 28 eingeschraubt, dass der Koppelkopf 30 mit etwas Abstand zur Stirnfläche des Gehäuses 26 angeordnet ist. Die Gewindebohrungen 28 sind vorzugsweise Sacklochbohrungen mit einer Tiefe, die so ausgebildet ist, dass die Koppelköpfe 30 einen vorbestimmten Abstand zur Stirnfläche des Gehäuses 26 aufweisen, wenn die Bajonettkoppelelemente 27 bis auf Anschlag in die Gewindebohrungen 28 eingeschraubt sind.

Weiterhin weist das Gehäuse 26 an der Stirnseite vier Sacklochbohrungen auf, die jeweils eine Aufnahme 31 zum Aufnehmen eines Magnetelementes bilden. Die Sacklochbohrungen sind im vorliegenden Ausführungsbeispiel gleichmäßig verteilt an der ringförmigen Stirnseite des Gehäuses 26 angeordnet. Bei vier Aufnahmen 31 beträgt der Winkelabstand zwischen zwei benachbarten Aufnahmen 90°. Im Rahmen der Erfindung können die Aufnahmen auch unterschiedliche Winkelabstände zueinander aufweisen.

Der Vergrößerungsaufsatz 10 kann mit den Bajonettkoppelelementen 27 jeweils durch die Zugangsöffnungen 20 in einen der Bajonettschlitze 18 eingeführt werden. Durch eine Drehbewegung des Vergrößerungsaufsatzes 10 bzgl. dem jeweiligen Fernrohr 5 um eine optische Achse 32 werden die Bajonettkoppelelemente 27 zum anderen Ende des jeweiligen Bajonettschlitzes bewegt. Hierbei hintergreifen die Bajonettkoppelelemente 27 den jeweiligen Vorsprung 19 der Bajonettschlitze 18. Damit ist der Vergrößerungsaufsatz 10 am Adapter 13 fixiert. Die jeweils vier Magnetelemente des Adapters 13 und die vier Magnetelemente des Vergrößerungsaufsatzes 10 sind so angeordnet, dass sie in der geschlossenen Stellung des Bajonettverschlusses sich paarweise einander gegenüberliegen und sich gegenseitig anziehen. Hierdurch wird die Drehposition des Vergrößerungsaufsatzes 10 bezüglich des Adapters 13 fixiert.

Um den Vergrößerungsaufsatz 10 vom Adapter 13 wieder zu lösen, muss der Vergrößerungsaufsatz 10 bezüglich des Adapters 13 gedreht werden, wobei die Anziehungskräfte der Magnete überwunden werden müssen. Mittels der Magnetelemente wird somit sichergestellt, dass sich beim Gebrauch die Vergrößerungsaufsätze 10 nicht aus Versehen gegenüber dem Adapter 13 drehen und sich von diesem lösen.

Mit diesem Adapter 13 wird somit ein Bajonettverschluss zum Befestigen des Vergrößerungsaufsatzes 10 an dem jeweiligen Fernrohr 5 bereitgestellt. Der Bajonettverschluss erlaubt ein sehr schnelles Befestigen und Lösen des Vergrößerungsaufsatzes 10 am jeweiligen Fernrohr 5. Zudem kann mit dem Bajonettverschluss sehr exakt die Relativposition des Vergrößerungsaufsatzes 10 zum jeweiligen Fernrohr 5 festgelegt werden.

Weiterhin dient der Adapter 13, wenn kein Vergrößerungsaufsatz 10 am Fernrohr 5 angeordnet ist, als Schutzabdeckung.

Beim obigen Ausführungsbeispiel ist der Adapter mit einem Bajonettverschluss zum Befestigen des Vergrößerungsaufsatzes 10 ausgebildet. Im Rahmen der Erfindung sind auch andere Befestigungselemente möglich. Beispielsweise kann eine Steckverbindung mit zwei oder mehreren Positionierstiften vorgesehen sein, welche in den entsprechenden Positionierausnehmungen eingreifen. Die Positionierstifte können durch Reibschluss in entsprechenden Positionierausnehmungen gehalten werden. Alternativ oder zusätzlich können auch Magnetelemente, welche sowohl am Adapter als auch am Gehäuse des Vergrößerungsaufsatzes 10 vorgesehen sind, die nötige Haltekraft ausüben, um den Vergrößerungsaufsatz 10 am jeweiligen Fernrohr 5 in Kombination mit einer Steckverbindung zu halten.

Weiterhin können Rastverbindungen vorgesehen sein. Insbesondere können Rastmittel geeignet sein, welche mit einer Drehbewegung um etwa 20° bis 90° fixiert und wieder gelöst werden können.

### Bezugszeichenliste

- 1: Brille
- 2: Brillengestell
- 3: Brillenbügel
- 4: Brillenglas
- 5: Fernrohr
- 6: Beleuchtungseinrichtung
- 7: Kabel
- 8: Brücke
- 9: Haltegestell
- 10: Vergrößerungsaufsatz
- 11: Gehäuse
- 12: Außengewinde
- 13: Adapter
- 14: ringförmiger Grundkörper
- 15: ringförmige Abdeckplatte
- 16: Außengewinde
- 17: zentrale Durchgangsöffnung

- 18: Bajonettschlitz
- 19: Vorsprung
- 20: Zugangsöffnung
- 21: Aufnahme
- 22: Gewindebohrung
- 23: Ringsteg
- 24: Schrauben
- 25: Scheibe
- 26: Gehäuse
- 27: Bajonettkoppelelemente
- 28: Gewindebohrung
- 29: Gewindestift
- 30: Koppelkopf
- 31: Aufnahme

## Patentansprüche

1. Lupenbrille (1) umfassend ein Brillengestell (2), zwei Brillengläser (4) und zwei Fernrohre(5) , welche jeweils an oder vor einem der Brillengläser (4) angeordnet sind,
**dadurch gekennzeichnet,**
**dass** die Fernrohre (5) jeweils mit einem Vergrößerungsaufsatz (10) versehen sind, der lösbar am jeweiligen Fernrohr (5) befestigt ist, und wobei
die Lupenbrille (1) einen Adapter (13) aufweist, um einen Vergrößerungsaufsatz (10) an eines der Fernrohre (5) zu koppeln, wobei der Adapter umfasst,
einen Ringkörper (14), welcher an einer Seite ein Verbindungselement zum lösbaren Verbinden des Ringkörpers (14) an ein vorderes Ende eines Fernrohres (5) einer Lupenbrille aufweist und an der anderen Seite des Ringkörpers einen Koppelmechanismus zum Koppeln eines Vergrößerungsaufsatzes (10) an den Adapter (13) und damit mittelbar an ein Fernrohr (5) einer Lupenbrille aufweist, wobei die Lupenbrille mit und ohne Vergrö-ßerungsaufsatz benutzt werden kann, wobei das Verbindungselement zum lösbaren Verbinden des Ringkörpers (14) an das vordere Ende eines der Fernrohre (5) der Lupenbrille (1) ein Gewinde ist.

2. Lupenbrille (1) nach Anspruch 1,
**dadurch gekennzeichnet,**
**dass** der Vergrößerungsaufsatz (10) die Brennweite des jeweiligen Fernrohres (5) um einen vorbestimmten Faktor n vervielfacht.

3. Lupenbrille (1) nach Anspruch 2,
**dadurch gekennzeichnet,**
**dass** der Faktor n zumindest 1,2, vorzugsweise zumindest 1,5 beträgt.

4. Lupenbrille (1) nach Anspruch 2 oder 3,
**dadurch gekennzeichnet,**
**dass** der Faktor n nicht größer als 5 bzw. nicht größer als 3 ist.

5. Lupenbrille (1) nach einem der Ansprüche 1 bis 4,
**dadurch gekennzeichnet,**
**dass** der Vergrößerungsaufsatz (10) invariant zum Arbeitsabstand des jeweiligen Fernrohrs (5) ist.

6. Lupenbrille (1) nach einem der Ansprüche 1 bis 5,
**dadurch gekennzeichnet,**
**dass** der Adapter (13) mit seinem Ringkörper (14) eine Scheibe (25) einfasst.

7. Lupenbrille (1) nach einem der Ansprüche 1 bis 6,
**dadurch gekennzeichnet,**
**dass** der Koppelmechanismus ein Schnellverschluss ist, der ausgebildet ist, um mit einem einfachen Handgriff den Vergrößerungsaufsatz (10) an den Adapter (13) zu koppeln und von diesem zu lösen.

8. Lupenbrille (1) nach Anspruch 7,
**dadurch gekennzeichnet,**
**dass** der Koppelmechanismus ein Bajonettverschluss oder eine Steckverbindung ist.

9. Lupenbrille (1) nach einem der Ansprüche 1 bis 8,
**dadurch gekennzeichnet,**
**dass** der Adapter (13) einen oder mehrere Magnete aufweist, welche zum Koppeln an entsprechende Magnete am Vergrößerungsaufsatz (10) angeordnet sind.

10. Lupenbrille (1) nach einem der Ansprüche 1 bis 9,
**dadurch gekennzeichnet,**
**dass** der Adapter (13) ein Rastelement aufweist, das mit einem Gegenrastelement am Vergrößerungsaufsatz (10) rastend in Eingriff treten kann.

## Claims

1. Loupe spectacles (1), comprising a spectacle frame (2), two spectacle lenses (4) and two telescopes (5) which are each arranged on or in front of one of the spectacle lenses (4),
**characterized in that**
the telescopes (5) are each provided with a magnification attachment (10) which is detachably fastened to the respective telescope (5), and wherein
the loupe spectacles (1) have an adapter (13) for coupling a magnification attachment (10) to one of the telescopes (5), the adapter comprising
a ring body (14) which has on one side a connecting element for detachably connecting the ring body (14) to a front end of a telescope (5) of said loupe spectacles and on the other side of the ring body a coupling mechanism for coupling a magnification attachment (10) to the adapter (13) and thus indirectly to a telescope (5) of said loupe spectacles, wherein the loupe spectacles can be used with and without magnification attachment, wherein the connecting element for detachably connecting the ring body (14) to the front end of one of the telescopes (5) of the loupe spectacles (1) is a thread.

2. The loupe spectacles (1) according to claim 1,
**characterized in that**
the magnification attachment (10) multiplies the focal length of the respective telescope (5) by a predetermined factor n.

3. The loupe spectacles (1) according to claim 2,
**characterized in that**
the factor n is at least 1.2, preferably at least 1.5.

4. The loupe spectacles (1) according to claim 2 or 3,
**characterized in that**
the factor n is not greater than 5 or not greater than 3.

5. The loupe spectacles (1) according to any of claims 1 to 4,
**characterized in that**
the magnification attachment (10) is invariant regarding the working distance of the respective telescope (5).

6. The loupe spectacles (1) according to any of claims 1 to 5,
**characterized in that**
the adapter (13) encloses a disk (25) with its ring body (14).

7. The loupe spectacles (1) according to any of claims 1 to 6,
**characterized in that**
the coupling mechanism is a quick-release fastener which is designed to couple the magnification attachment (10) to the adapter (13) and release it from the latter with a simple hand movement.

8. The loupe spectacles (1) according to claim 7,
**characterized in that**
the coupling mechanism is a bayonet lock or a plug-in connection.

9. The loupe spectacles (1) according to any of claims 1 to 8,
**characterized in that**
the adapter (13) has one or more magnets, which are arranged for being coupled to corresponding magnets on the magnification attachment (10).

10. The loupe spectacles (1) according to any of claims 1 to 9,
**characterized in that**
the adapter (13) has a latching element which can engage with a mating latching element on the magnification attachment (10) in a latching manner.

## Revendications

1. Lunettes-loupe (1), comprenant une monture de lunettes (2), deux verres de lunettes (4) et deux télescopes (5) qui sont chacun disposés sur ou devant l'un des verres de lunettes (4),
**caractérisées en ce que**
les télescopes (5) sont chacun dotés d'un dispositif de grossissement (10) qui est fixé de manière amovible au télescope (5) respectif, et dans lequel
les lunettes-loupes (1) ont un adaptateur (13) pour coupler un dispositif de grossissement (10) à l'un des télescopes (5), l'adaptateur comprenant
un corps annulaire (14) qui présente d'un côté un élément de connexion pour connecter de manière amovible le corps annulaire (14) à une extrémité avant d'un télescope (5) desdites lunettes-loupes et, de l'autre côté du corps annulaire, un mécanisme de couplage pour coupler un dispositif de grossissement (10) à l'adaptateur (13) et donc indirectement à un télescope (5) desdites lunettes-loupes, les lunettes-loupes pouvant être utilisées avec ou sans dispositif de grossissement, l'élément de connexion permettant de relier de manière amovible le corps annulaire (14) à l'extrémité avant de l'un des télescopes (5) des lunettes-loupes (1) étant un filetage.

2. Lunettes-loupes (1) selon la revendication 1,
**caractérisées en ce que**
le dispositif de grossissement (10) multiplie la longueur focale du télescope respectif (5) par un facteur n prédéterminé.

3. Lunettes-loupes (1) selon la revendication 2,
**caractérisées en ce que**
le facteur n est d'au moins 1,2, de préférence d'au moins 1,5.

4. Lunettes-loupes (1) selon la revendication 2 ou 3,
**caractérisées en ce que**
le facteur n est inférieur ou égal à 5 ou inférieur ou égal à 3.

5. Lunettes-loupes (1) selon l'une quelconque des revendications 1 à 4,
**caractérisées en ce que**
le dispositif de grossissement (10) est invariant par rapport à la distance de travail du télescope respectif (5).

6. Lunettes-loupes (1) selon l'une des revendications 1 à 5,
**caractérisées en ce que**
l'adaptateur (13) encadre un disque (25) avec son corps annulaire (14).

7. Lunettes-loupes (1) selon l'une quelconque des revendications 1 à 6,
**caractérisées en ce que**
le mécanisme de couplage est une fermeture rapide conçue pour coupler le dispositif de grossissement (10) à l'adaptateur (13) et le libérer de ce dernier avec un simple geste de la main.

8. Lunettes-loupes (1) selon la revendication 7,
**caractérisées en ce que**
le mécanisme de couplage est une fermeture à baïonnette ou une connexion enfichable.

9. Lunettes-loupes (1) selon l'une des revendications 1 à 8,
**caractérisées en ce que**
l'adaptateur (13) comporte un ou plusieurs aimants, qui sont disposés pour être couplés à des aimants correspondants sur le dispositif de grossissement (10).

10. Lunettes-loupes (1) selon l'une des revendications 1 à 9,
**caractérisées en ce que**
l'adaptateur (13) comporte un élément d'encliquetage qui peut s'engager par encliquetage avec un contre-élément d'encliquetage sur le dispositif de grossissement (10).
